# EUROPÄISCHE PATENTSCHRIFT

(11) **EP 3 976 328 B1**
(45) Veröffentlichungstag und Bekanntmachung des Hinweises auf die Patenterteilung: **08.11.2023**
(21) Anmeldenummer: 20745087.5
(22) Anmeldetag: 25.05.2020
(51) Int. Cl.: B27C 3/04, B27C 9/04, B23Q 39/02

(54) **MULTIBEARBEITUNGSEINHEIT**
MULTI-PROCESSING UNIT
UNITÉ D'USINAGE MULTIPLE

(30) Priorität: 27.05.2019 DE 102019003701
(43) Veröffentlichungstag der Anmeldung: 06.04.2022
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2020/000108
(87) Internationale Veröffentlichungsnummer: WO 2020/239155

(56) Entgegenhaltungen:
- EP-A1- 0 581 247
- DE-A1- 2 401 290
- DE-A1-102017 012 076

## Beschreibung

Die Erfindung betrifft eine Multibearbeitungseinheit mit einer Vielzahl von in und an einem Zentralkörper ein- oder angebauten bewegbaren Werkzeugen zur handhabenden, spanenden, fügenden und montierenden Werkstückmanipulation oder -bearbeitung mit mindestens einem zentralen Antrieb, wobei sich die spanenden Werkzeuge im Zentralkörper entweder in einer eingefahrenen Parkposition oder in einer ausgefahrenen Arbeitsposition befinden, wobei mehrere spanende Werkzeuge - zu einer Gruppe mechanisch oder softwaretechnisch zusammengefasst - zeitgleich in eine Arbeitsposition bringbar sind und wobei die spanenden Werkzeuge verschiedene Typen oder Größen für trennende Fertigungsverfahren darstellen.

Aus der DE 10 2017 012 076 A1, die die Präambel des Hauptanspruches offenbart, ist eine Multifunktionseinheit aus einer Vielzahl von in einem Grundkörper eingebauten angetriebenen Werkzeugen mit mindestens einem zentralen Antrieb bekannt. Dabei befinden sich die Werkzeuge im Grundkörper entweder in einer eingefahrenen Parkposition oder in einer ausgefahrenen Arbeitsposition. Die Werkzeuge stellen verschiedene Typen für trennende und fügende Fertigungsverfahren dar.

Die EP 0 581 247 A1 beschreibt eine Schrauben-Anziehvorrichtung mit Antrieb. Der Antrieb besteht aus einem Flügelmotor, einem Vorgelege und einer Strömungskupplung. Der mittels eines strömenden Mediums antreibbare Flügelmotor ist als Ganzes um seine Mittellinie rotierbar im Gehäuse der Vorrichtung gelagert. Seine Abtriebswelle wirkt über ein Vorgelege auf eine Schrauberwelle. Das Flügelmotorgehäuse ist drehstarr mit dem Rotor der Strömungskupplung verbunden. Bei einem Blockieren der Schrauberwelle dreht der Rotor der Strömungskupplung im Antriebsgehäuse durch.

Aus der EP 0 581 247 A1 ist eine Setzvorrichtung zum Setzen von plattenartigen Halteeinrichtungen bekannt. Mit ihr werden Dachabdichtungsbahnen auf Dächern mithilfe von Schrauben und Dichtscheiben befestigt. Die in der Setzvorrichtung magazinierten Dichtscheiben und Schrauben werden automatisch vor einem Elektroschrauber positioniert, um die Schrauben mit den Dichtscheiben durch die Dachabdichtungsbahnen mit dem Dach zu verschrauben.

Der vorliegenden Erfindung liegt die Problemstellung zugrunde, eine angetriebene Multibearbeitungseinheit zum greifenden, trennenden und/oder fügenden Bearbeiten und/oder Handhaben für einfache Werkzeugwechsel zu entwickeln, die im 3-dimensionalen Raum frei bewegbar ist, um platten- und/oder brettartige Werkstücke mit verschiedenen Werkzeugen zu handhaben und zu bearbeiten.

Diese Problemstellung wird mit den Merkmalen des Hauptanspruchs gelöst. Dabei ist mindestens ein handhabendes Werkzeug der Multibearbeitungseinheit ein Greifwerkzeug. Das Greifwerkzeug ist eine zwei Parallelgreifvorrichtungen aufweisende Plattengreifvorrichtung zum Ergreifen vom Möbelplatten.

Die Multibearbeitungseinheit weist eine Vielzahl gleichartiger und/oder verschiedener Werkzeuge auf, mit denen beispielsweise in eine Möbelplatte verschiedene Bohrungen, Ausnehmungen und dergleichen eingearbeitet werden können. Dazu werden die für einen Bearbeitungsschritt erforderlichen Werkzeuge, z.B. eine Gruppe von mehreren Bohrern, pneumatisch aus der Multibearbeitungseinheit ausgefahren, verriegelt und in Rotation versetzt. Mit rotierenden Bohrern wird nun die Multibearbeitungseinheit von dem sie tragenden Handhabungsgerät in eine vorgewählte Position vor der Möbelplatte positioniert und ab dort geradlinig gegen die Möbelplatte verfahren, um z.B. eine Lochreihe zu fertigen. Am Ende des Bohrvorganges wird die Multibearbeitungseinheit zurückgezogen. Zugleich werden die aktiven Bohrer unter Abschaltung ihrer Rotationsbewegung wieder eingefahren.

Die Multibearbeitungseinheit hat zudem z.B. eine Sockelmontagevorrichtung und/oder eine Beschlagsetztvorrichtung, mit der sie in einen Teil der gebohrten Bohrungen einen Möbelsockel oder einen Beschlag setzt. Dabei haben diese Vorrichtungen spezielle Mittel, mit deren Hilfe sie den Sockel oder den Beschlag aus einem Magazin entnehmen, vor die Bohrungen der Möbelplatte fördern und dort in den Bohrungen befestigen. Hierfür stehen an der Multibearbeitungseinheit Werkzeuge zur Verfügung, die an die jeweiligen Anbauteile angepasst sind. Die Multibearbeitungseinheit ist dazu in allen sechs Freiheitsgraden innerhalb des Bearbeitungsraumes frei bewegbar.

Weitere Einzelheiten der Erfindung ergeben sich aus den Unteransprüchen und der nachfolgenden Beschreibung mindestens einer schematisch dargestellten Ausführungsform.
- Figur 1:: perspektivische Ansicht einer robotergeführten Multibearbeitungseinheit;
- Figur 2:: perspektivische Ansicht des Zentralkörpers der Multibearbeitungseinheit;
- Figur 3:: Zentralkörperansicht von schräg unten, verkleinert;
- Figur 4:: perspektivische Ansicht einer Plattengreifvorrichtung;
- Figur 5:: perspektivische Ansicht einer Sockelmontagevorrichtung;
- Figur 6:: Sockelmontagevorrichtung mit nebeneinander aufgereihten Baugruppen;
- Figur 7:: perspektivische Ansicht einer Beschlagsetzvorrichtung;
- Figur 8:: Beschlagsetzvorrichtung mit nebeneinander aufgereihten Baugruppen;
- Figur 9:: perspektivische Ansicht des Möbelbeschlags von schräg oben.

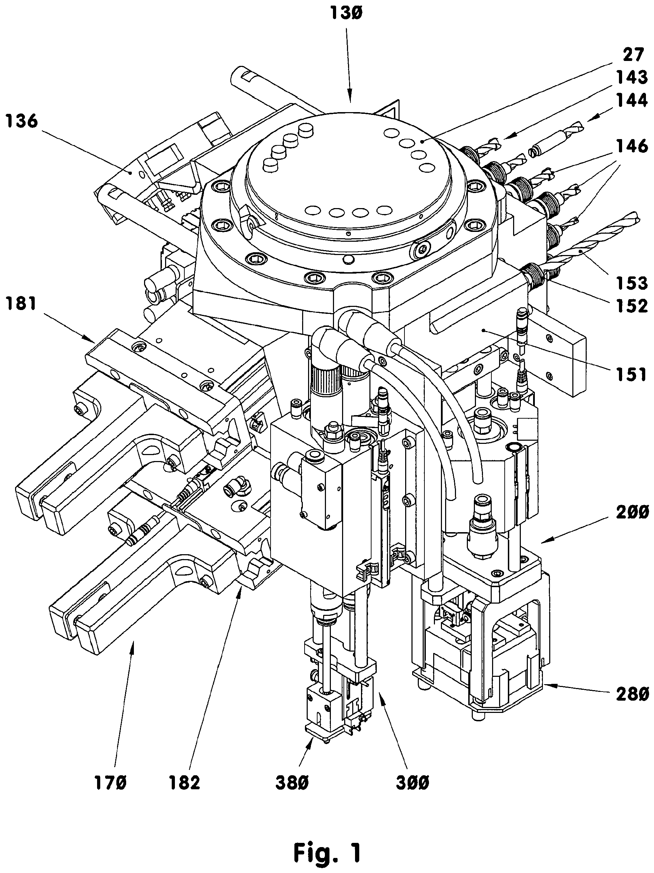

Die Figur 1 zeigt eine Multibearbeitungseinheit (100), die getragen und geführt von einem Handhabungsgerät (10) platten- oder brettförmige Werkstücke ergreifen und bearbeiten kann. Die Werkstücke, z.B. Möbelplatten (1), sind beispielsweise aus nichtmetallischen Werkstoffen wie Holz, Spanplatten, Gipskartonagen, Faserzement oder dergleichen gefertigt. Zu diesen Werkstoffen zählen auch Verbundwerkstoffe ohne größeren Metallanteil. Das Handhabungsgerät (10) ist hier beispielsweise ein Gelenkroboter mit einer sogenannten RRR-Kinematik. Im Ausführungsbeispiel verfügt die Multibearbeitungseinheit (100) erstens über eine Gruppe aus zehn ausfahrbaren Bohrwerkzeugen (145), zweitens über ein Tieflochbohrwerkzeug (152), drittens über eine Plattengreifvorrichtung (170), viertens über eine Sockelmontagevorrichtung (200) und fünftens über eine Beschlagsetzvorrichtung (300).

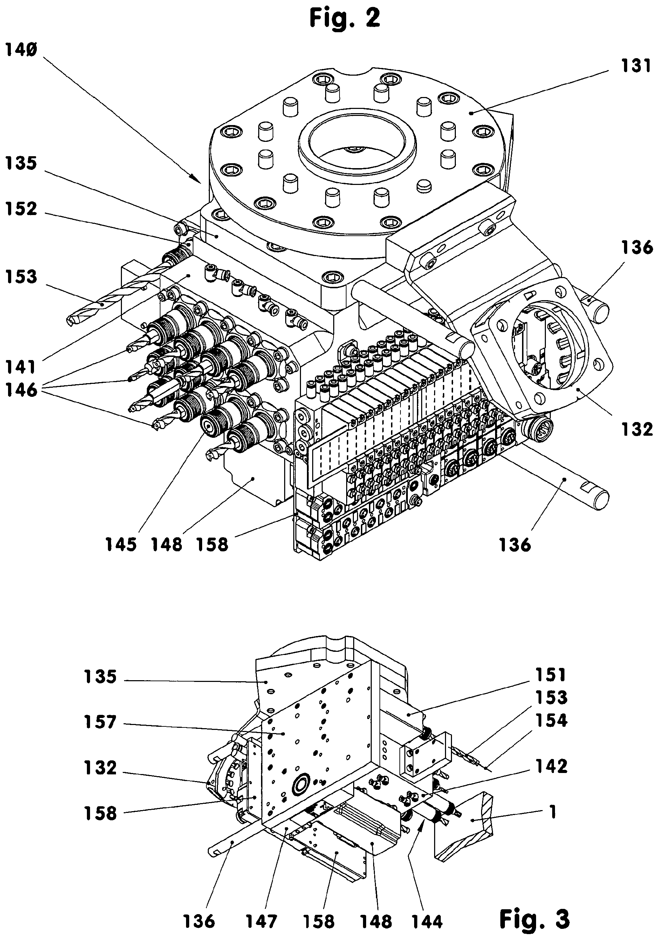

Die Multibearbeitungseinheit (130) besteht im Kern aus einem Zentralkörper (140), der ohne weitere Anbauten im Prinzip ein Bohrkopf ist. Am Zentralkörper (140) ist über eine Zwischenträgerplatte (135) eine Roboterflanschplatte (131) befestigt, vgl. Figur 2. Letztere dient als Adapter, über den die Massenkräfte der Multibearbeitungseinheit (100) am Handhabungsgerät (10) abgestützt sind und über den mindestens die Energie und die Datenkommunikation übertragbar ist.

An der Roboterflanschplatte (131) ist eine Kabelschlauchhalterung (132) befestigt, in der der Kabelschlauch zur geschützten Führung der Energieleitungen und -schläuche sowie der Kommunikationsleitungen gehalten wird. Unterhalb der Kabelschlauchhalterung (132) ist eine Ventilträgerplatte (158) angeordnet, auf der die pneumatischen Ventile und die Anschlüsse für Last- und Signalleitungen befestigt sind.

Der Zentralkörper (140), der aus einer Aluminiumlegierung gefertigt ist, besteht aus einem quaderförmigen Hauptkörper (141). An diesem ist seitlich ein kleinerer, ebenfalls quaderförmiger Nebenkörper (151) mit fast quadratischem Querschnitt angeformt. Gemäß Figur 3 steht aus dem unteren Bereich des Hauptkörpers (141) eine ebenfalls quaderförmige Motorflanschplatte (147) hervor. Ihre Frontseite kontaktiert die Hauptflanschplatte (157).

Im Hauptkörper (141) ist, nach Figur 2, z.B. eine Gruppe von mehreren Bohrwerkzeugen (145) angeordnet. Die Mittellinien der Bohrwerkzeuge (145) sind dabei parallel zur Roboterflanschplatte (131) orientiert. Jedes pinolenartige Bohrwerkzeug (145) endet im Bereich der Vorderseite des Hauptkörpers (141) in einer eine Werkzeugaufnahme tragenden Spindel, um dort beispielsweise als Werkzeug jeweils Bohrer (146) oder Fräser aufzunehmen. Zumindest ein Teil der Spindeln hat einen Ausfahrhub von z.B. 60-70 mm. Die ausfahrbaren Werkzeuge befinden sich in ihrer Ruhestellung in einer versenkten Parkposition (143), vgl. Figuren 1 und 2. Zum Bearbeiten eines Werkstückes (1) werden sie von dort aus in eine Arbeitsposition (144) einzeln oder gruppenweise ausgefahren.

Unter der Hauptflanschplatte (157) sind die Spindelenden aller Bohrwerkzeuge (145) über Zahnräder miteinander verbunden, die durch einen Servomotor (148) antreibbar sind. Innerhalb des Hauptkörpers (141) sitzen alle auf den Spindeln gelagerten Zahnräder in einer Ebene. Hierbei befindet sich jedes Zahnrad des Stirnradgetriebes in einer zylindrischen Aussparung des Hauptkörpers (141), die z.B. 1 bis 2 mm größer ist als der jeweilige Kopfkreisdurchmesser des dort angeordneten Zahnrades. Dadurch ergibt sich um die Zahnräder herum ein schmaler Spaltraum. Zugleich haben die Stirnseiten der Zahnräder gegenüber dem Grundkörper jeweils pro Seite nur einen Abstand von 0,2 bis 0,4 mm. In den zusammenhängenden Spaltraum münden im Hauptkörper (141) mehrere von außen zugängliche Schmierstoffzuführstellen. Über letztere wird der Spaltraum teilweise mit Schmierfett befüllt. Während des Betriebs wird das Schmiermittel mittels der Zahnräder permanent entlang des Getriebezugs gefördert. Unabhängig von der Park- oder der Arbeitsposition bleiben z.B. alle Zahnräder permanent im Eingriff.

An der Unterseite des Hauptkörpers (141) ist an der nach unten ragenden Motorflanschplatte (147) ein Servomotor (148) angeflanscht. Die Mittellinie der Antriebswelle des Servomotors (148) ist parallel zu den Mittellinien der Bohrwerkzeuge (145) orientiert. In Figur 3 ist das Rillenkugellager erkennbar, das eine Wellenverlängerung des Servomotors (148) in der Hauptflanschplatte (157) abstützt. Auf der Wellenverlängerung sitzt drehfest das Antriebsritzel, über das das Stirnradgetriebe angetrieben wird. Der Servomotor (148) ist ein permanentmagneterregter Drehstromsynchronmotor mit z.B. einer Nennleistung von 1,4 kW. Er hat ein Spitzendrehmoment von z.B. 11,7 Nm.

Nach Figur 3 ist in dem am Hauptkörper (141), in dessen oberen Bereich um z.B. 73 mm zurückgesetzt, angeformten Nebenkörper (151) ein Tieflochbohrwerkzeug (152) eingebaut.

Nach Figur 3 ist im oberen Bereich des Hauptkörpers (141) ein Nebenkörper (151) angeformt, in dem ein Tieflochbohrwerkzeug (152) eingebaut ist. Die vordere Stirnseite des Nebenkörpers (151) ist um z.B. 73 mm gegenüber der vorderen Stirnseite des Hauptkörpers (141) zurückgesetzt. Die Mittellinie (154) des Tieflochbohrwerkzeugs (152) verläuft parallel zur Mittellinie der Bohrwerkzeuge (145) des Hauptkörpers (141). Der Abstand zwischen der Mittellinie (154) und der Wandung des Hauptkörpers (141) beträgt z.B. 28 mm.

Der im Tieflochbohrwerkzeug (152) eingesetzte Tieflochbohrer (153) hat - bei einem Durchmesser von z.B. 10 mm - eine wirksame Bohrerlänge von z.B. 115 mm. Mit dem Tieflochbohrer (153) werden in die Schmalseiten der Möbelplatten (1) Bohrungen gesetzt, in der beispielsweise Möbeltürdämpfer eingebaut werden.

Gemäß Figur 2 sind im Bereich der Seite, an der die Ventilträgerplatte (158) angeordnet ist, drei Wartungsabstellstützen (136) befestigt. Eine ist links neben der Kabelschlauchhalterung (132) an der Zwischenträgerplatte (135) montiert. Die beiden anderen sind hinter der Kabelschlauchhalterung (132) an der vorderen Stirnseite der Hauptflanschplatte (157) eingeschraubt. Die Wartungsabstellstützen (136) werden nach der Erstmontage und nach jeder Wartung entfernt.

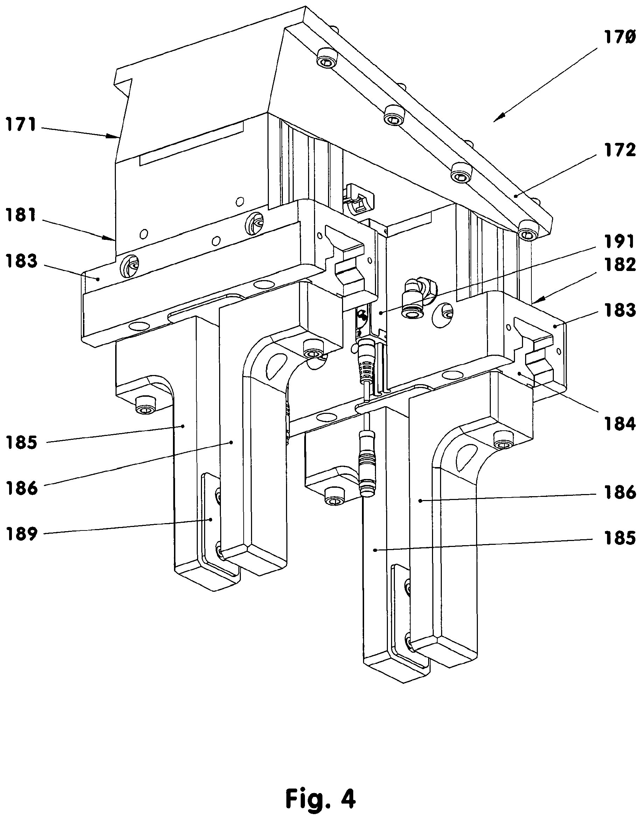

Die Figur 4 zeigt die Plattengreifvorrichtung (170) in perspektivischer, hängender Darstellung mit der Möbelplatten (1) vom Handhabungsgerät (10) zum Umsetzen ergriffen werden. Die Plattengreifvorrichtung (170) besteht im Wesentlichen aus einem Adapterkeil (171) und zwei daran formsteif befestigten Parallelgreifvorrichtungen (181, 182).

Der Adapterkeil (171) hat die geometrische Form eines Keils, dessen Keilwinkel 15 Winkelgrade beträgt. An jeder seitlichen Schmalseite ist jeweils ein Flanschsteg (172) angeformt. Über die beiden Flanschstege (172) ist der Adapterkeil (171) zusammen mit den Parallelgreifvorrichtungen (181, 182) an der Hauptflanschplatte (157), vgl. Figur 3, befestigt. Die breite Seite des Adapterkeils (171) endet unter der Zwischenträgerplatte (135) der Multibearbeitungseinheit (100), sodass die beiden Parallelgreifvorrichtungen (181, 182), gemäß Figur 1, schräg nach unten ragen.

Am Adapterkeil (171) ist das Gehäuse (183) der oberen Parallelgreifvorrichtung (181) mit seiner Gehäusekante an dessen oberen Kante angeordnet, während das Gehäuse (183) der unteren Parallelgreifvorrichtung (181, 182) mit seiner Kante bündig an der unteren Kante des Adapterkeils (171) anliegt. Die geometrischen Mitten der beiden jeweils unabhängig voneinander wirkenden Parallelgreifvorrichtungen (181, 182) sind im Ausführungsbeispiel 150 mm voneinander entfernt.

Die einzelne Parallelgreifvorrichtung (181, 182) lagert in ihrem Gehäuse, zur Sicherung der Robustheit und Tragkraft, in Stahlführungen die die Plattengreifelemente (185, 186) tragenden Plattengreifschlitten (184). Letztere sind ebenfalls aus einer Stahllegierung hergestellt. Das Gehäuse (183) ist rundherum staubdicht abgedichtet. Der Greifhub der Plattengreifelemente (185, 186), er beträgt z.B. pro Plattengreifelement (185, 186) 13 mm, wird indirekt mittels eines am Antriebsgehäuse jeder Parallelgreifvorrichtung (181, 182) angeordneten analogen Wegmesssystems (191) erfasst.

Das einzelne Plattengreifelement (185, 186) hat z.B. eine Länge von 140 mm, wobei im Bereich seines freien Endes jeweils ein Greifbelag (189) aus Polyurethan vertieft eingelassen ist. Jeder z.B. festgeschraubte Greifbelag (189) hat bei einer Länge von 50 mm eine Breite von 27 mm. Er ragt z.B. 3 mm über die Innenflanke des jeweiligen Plattengreifelementes (185, 186) über.

Die Greifkraft der Plattengreifelemente (185, 186) beträgt z.B. 1900-2000 N. Die Kombination aus der großen Greifkraft und der Haftfähigkeit der Greifbeläge (189) ermöglicht es auch große Möbelplatten (1), z.B. in Form von Schranktüren, sicher zu fassen, ohne deren Oberfläche zu beschädigen. In jeder Plattengreifvorrichtung (181, 182) wird sowohl die Greif- als auch die Lösekraft mithilfe einer doppelt wirkenden druckluftbetätigten Zylinder-Kolben-Einheit erzeugt. Für den Greifhub wird der Kolben der Zylinder-Kolben-Einheit durch einen Federspeicher unterstützt, um z.B. nach einem Notaus der Anlage die gegriffene Möbelplatte (1) auch ohne das Anstehen von Druckluft zu halten.

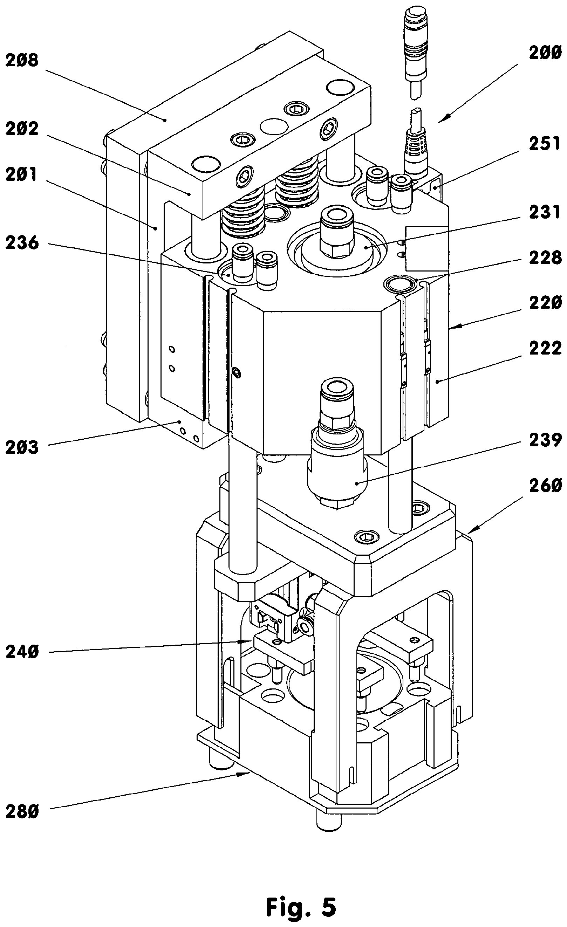

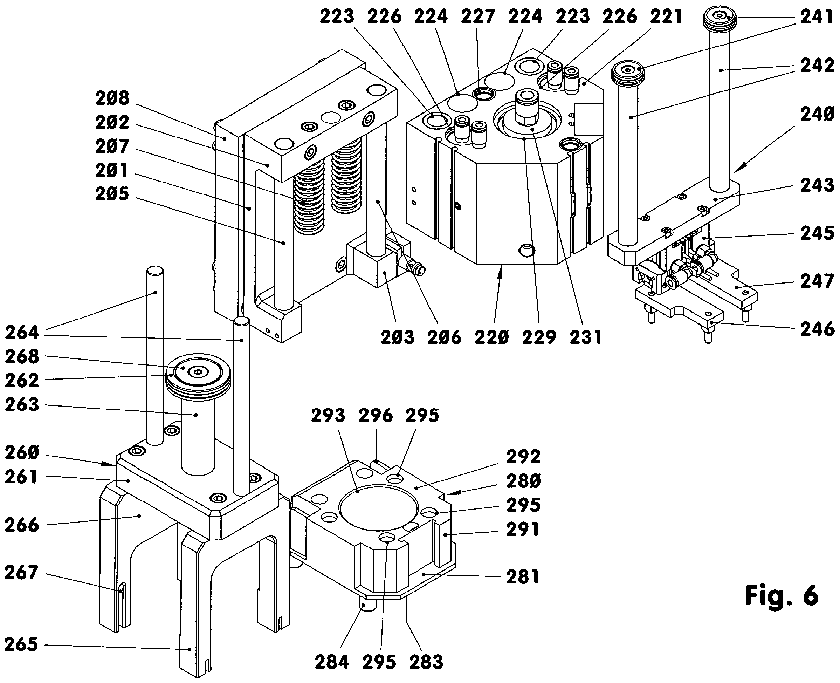

Die Figur 5 zeigt eine Sockelmontagevorrichtung (200) zur Befestigung eines Möbelsockels (280) an der Unterseite einer Möbelplatte, die z.B. Teil eines Küchenmöbels ist. Der Möbelsockel (280), vgl. auch Figur 6, besteht aus einer Sockelplatte (281), auf der ein Sockelaufbaugehäuse (291) aufgebaut ist. An der Möbelanlageseite (283) der Sockelplatte (281) sind vier Möbelsteckzapfen (284) angeordnet, über die der Möbelsockel (280) in Bohrungen der Möbelplatte, z.B. kraft-, form- und reibschlüssig, fixierbar ist.

Das Sockelaufbaugehäuse (291) hat u.a. eine große, nahezu zentral angeordnete Bohrung, um die vier wesentlich kleinere Sockelmontagebohrungen (295) angeordnet sind. Alle fünf Bohrungen sind Durchgangsbohrungen, die zudem parallele Mittellinien aufweisen. Alle Mittellinien sind senkrecht zur Unterseite (292) des Sockelaufbaugehäuses (291) ausgerichtet.

Nach Figur 6 befinden sich im hinteren Bereich des Sockelaufbaugehäuses (291) zwei nach hinten ragende Sockelseitenstege (296), die auch an der Sockelplatte (281) angeformt sind.

Die Sockelmontagevorrichtung (200) umfasst zwei unabhängig voneinander bewegbare Vorrichtungen. Diese sind eine Sockelgreifvorrichtung (240) und eine Sockeleintreibvorrichtung (260). Beide Vorrichtungen (240, 260) sind in einem Zylinderblock (220) geführt und gelagert. Der Zylinderblock (220) selbst ist an einem Adapterkörper (201), nach Figur 6, in Vertikalrichtung an zwei Führungsstangen (205, 206) eines Adapterkörpers (201) geführt und gelagert. Der Adapterkörper (201) ist mittels einer Distanzplatte (208) an der Seite des Zentralkörpers (110) befestigt, der der Ventilträgerplatte (158) gegenüberliegt. Zudem ist der Adapterkörper (201) über Passstifte an der Distanzplatte (208) positioniert. Ebenso ist die Position der Distanzplatte (208) über weitere Passstifte am Zentralkörper (110) vorgegeben.

Zum besseren Verständnis des geometrischen Aufbaus der Sockelmontagevorrichtung (200) sind in Figur 6 die einzelnen Baugruppen bzw. Vorrichtungen jeweils seitlich versetzt zueinander dargestellt. Ausgehend vom Adapterkörper (201) ist der Zylinderblock (220) nach rechts versetzt dargestellt. Noch weiter rechts davon ist die Sockelgreifvorrichtung (240) abgebildet. Die Sockeleintreibvorrichtung (260) ist parallel nach links verschoben dargestellt. Der Möbelsockel (280) hat seine Position gegenüber dem Adapterkörper (201) nicht verändert, vgl. dazu Figur 5.

Der Adapterkörper (201) weist, gemäß der Figuren 5 und 6, jeweils oben und unten einen Führungsstangenhalter (202, 203) auf. Jeder Führungsstangenhalter hat in seinen beiden Endbereichen eine Durchgangsbohrung zur Lagerung der Führungsstangen (205, 206). Die zum Teil quaderförmig geformten Führungsstangenhalter (202, 203) dienen zudem als Führungsanschläge für den auf den Führungsstangen (205, 206) geführten Zylinderblock (220). Der untere Führungsstangenhalter (203) ist im mittleren Bereich mit einem Durchbruch versehen, um die hintere Pulsierführungsstange (264) der Sockeleintreibvorrichtung (260) nicht zu behindern.

Der Zylinderblock (220) ist z.B. ein zwölfeckiger Vollmaterialblock, dessen Ober- und Unterseite zueinander parallel ausgerichtet sind. Er hat in seinen hinteren Endbereichen zwei parallele, durchgehende Hauptführungsbohrungen (223), in denen Gleitlagerbüchsen zur Führung der Führungsstangen (205, 206) z.B. eingepresst oder eingeklebt sind. In der Oberseite des Zylinderblocks (220) befinden sich zwischen den Hauptführungsbohrungen (223) zwei Federsacklochbohrungen (224), die der Aufnahme von Schraubendruckfedern (207) dienen.

Vor jeder Hauptführungsbohrung (223) ist eine von der Oberseite (221) des Zylinderblocks (220) aus eingearbeitete - als Sackloch ausgebildete - Setzzylinderbohrung (226) angeordnet. Jede Setzzylinderbohrung (226) ist im Bereich der Oberseite (221) mit einem Deckel (236) dicht verschlossen, wobei jeder Deckel (236) einen Pneumatikanschluss aufweist. In jedem durch eine Setzzylinderbohrung und einen Deckel (236) gebildeten Setzzylinder ist ein Setzkolben (241) mit einer Setzkolbenstange (242) angeordnet.

Beide Setzkolben (241) sind am unteren Ende ihrer Setzkolbenstange (242) mittels eines stabförmigen Kolbenstangenquerhaupts (243) formsteif verbunden. Z.B. ist mittig an der Unterseite des Kolbenstangenquerhaupts (243) eine Setzparallelgreifvorrichtung (245) angeordnet. Dabei hat die Setzparallelgreifvorrichtung (245) zwei nebeneinander angeordnete, z.B. über ein pneumatisch betätigbares Doppelschiebekeilgetriebe, synchron antreibbare Schlitten. Jeder Schlitten trägt einen Doppelfingergreifarm (246, 247). Der einzelne Doppelfingergreifarm (246, 247) hat zwei nach unten ragende, z.B. rotationssymmetrische Greiffinger (248). Alle vier Greiffinger (248) sind parallel zueinander ausgerichtet.

Für die Sockeleintreibvorrichtung (260) weist der Zylinderblock (220) zwei Pulsierführungsbohrungen (227, 228) und eine Pulsierzylinderbohrung (229) auf. Die Mittellinien aller drei Bohrungen (227-229) liegen in einer nach Figur 6 vertikalen Mittenebene, die senkrecht zur Frontseite (222) und der Führungsebene des Zylinderblocks (220) orientiert ist. Die hintere Pulsierführungsbohrung (227) liegt zwischen den beiden Federsacklochbohrungen (224). Die vordere Pulsierführungsbohrung (228) hat nur einen kleinen Abstand zur Frontseite (222). Zwischen beiden Pulsierführungsbohrungen (227, 228) liegt die als Sackloch ausgebildete Pulsierzylinderbohrung (229). Im Bereich der Oberseite (221) des Zylinderblocks (220) ist die Pulsierzylinderbohrung (229) durch einen dicht sitzenden, magnetisierbaren, z.B. ferromagnetischen Deckel (231) mit Druckluftanschluss verschlossen. Die Pulsierzylinderbohrung (229) hat einen Durchmesser von z.B. 21 mm. Dieser Durchmesser ist beispielsweise doppelt so groß wie der Durchmesser einer Setzzylinderbohrung (226). Somit drückt die Sockeleintreibvorrichtung (260) gegenüber der Sockelgreifvorrichtung (240) mit der doppelten Kraft auf den Möbelsockel (280).

Die Pulsierführungsbohrungen (227, 228) des Zylinderblocks (220) weisen zumindest in ihren Endbereichen Gleitlagerbüchsen auf.

Das zentrale Bauteil der Sockeleintreibvorrichtung (260) ist eine z.B. quaderförmige Pulsierträgerplatte (261). Aus ihrer Oberseite (221), vgl. Figur 6, ragt z.B. mittig die Pulsierkolbenstange (263) mit ihrem endseitig angeordneten Pulsierkolben (262) hervor. Im Boden des Pulsierkolbens (262) ist ein Permanentmagnet (268) versenkt eingesetzt. Letzterer schließt z.B. bündig mit der Bodenseite des Pulsierkolbens (262) ab.

Beidseits der Pulsierkolbenstange (263) sind die beiden Pulsierführungsstangen (264) angeordnet. An der Unterseite der Pulsierträgerplatte (261) ist unter jeder Pulsierführungsstange (264) ein u-förmig geformter Pulsierdoppelarm (265, 266) starr befestigt. Die Arme der beiden Pulsierdoppelarme (265, 266) sind so gestaltet, dass ihre unteren Enden bzw. Stirnflächen alle in einer Ebene liegen, die zudem senkrecht zur Mittellinie der Pulsierkolbenstange (263) angeordnet ist. Diese Arme umfassen die vier Eckbereiche des Möbelsockels (280) oberhalb der Sockelplatte (281), vgl. Figur 5. Die Arme der hinteren Pulsierdoppelarme (265, 266) haben im unteren Armbereich jeweils eine Freiraumnut (267). Jede Freiraumnut (267) umgreift mit viel Spiel einen Sockelseitensteg (296) des Möbelsockels (280).

Um nun einen Möbelsockel (280) auf einem auf einem Saugerstützbock positionierten Möbelplatte (1) zu montieren, muss sich das Handhabungsgerät mit seiner in der Multibearbeitungseinheit (100) angebauten Sockeleintreibvorrichtung (260) voraus über dem in einer Magazinablage oder einem Magazin bereitgestellten Möbelsockel (280) positionieren. Dabei ist die Sockelgreifvorrichtung (240) komplett ausgefahren. Die Sockeleintreibvorrichtung (260) befindet sich dagegen in ihrer hinteren Position, sodass die Pulsierträgerplatte (261) an der Unterseite des Zylinderblocks (220) anliegt. In dieser Position liegt der Permanentmagnet (268) mit geringem oder keinem Spiel am Deckel (231) an. Die Magnetkraft des Permanentmagneten (268) ist größer als die Gewichtskraft der Sockeleintreibvorrichtung (260).

In einem ersten Schritt wird die Multibearbeitungseinheit (100) so lange abwärts bewegt, bis die Greiffinger (248) in den Sockelmontagebohrungen (295) des Möbelsockels (280) versenkt sind. In einem zweiten Schritt fahren die Doppelfingergreifarme (246, 247) der Setzparallelgreifvorrichtung (245) wenige zehntel Millimeter aufeinander zu, bis die Greiffinger (248) den Möbelsockel (280) verliersicher erfasst haben. In einem dritten Schritt entnimmt das Handhabungsgerät den Möbelsockel (280) von der Magazinablage, um diesen mit dessen vier Möbelsteckzapfen (284) voraus direkt vor den passenden Sockelsteckzapfenbohrungen zu positionieren. Die Heranfahrbewegung des Handhabungsgeräts in Normalenrichtung der Oberfläche der Möbelplatte (1) wird erst gestoppt, wenn die Setzkolben (241) im Zylinderblock (220) um z.B. 10 mm - gegen ihre Druckluftbelastung - zurückgeschoben wurden.

In einem vierten Schritt wird der Pulsierkolben (262) durch eine Druckbeaufschlagung seines Kolbenbodens ruckartig ausgefahren. Um eine hohe Pulsierkolbenbeschleunigung zu erzielen, wird vor dessen Druckbeaufschlagung der Kolbenstangenraum der Pulsierzylinderbohrung (229) mittels eines separaten Ventils entlüftet. Der Pulsierkolben (262) kann somit nahezu ohne Gegendruck ausfahren.

Am Möbelsockel (280) schlagen die freien Enden der Pulsierdoppelarme (265, 266) in den vier Bereichen der Sockelplatte (281) des Möbelsockels (280) gegen diese, an dessen Vorderseite sich die Möbelsteckzapfen (284) befinden. Aufgrund der Pulsierkolbenausfahrgeschwindigkeit und der Beschleunigung der an der Ausfahrbewegung beteiligten trägen Masse werden die Möbelsteckzapfen (284) pro Schlag z.B. 3-4 mm in die Sockelsteckzapfenbohrungen eingetrieben.

In einem fünften Schritt wird im Zylinderblock (220) die Druckluft auf den kolbenstangenseitigen Pulsierzylinderraum umgelenkt. Die Sockeleintreibvorrichtung (260) fährt nun z.B. 40 mm zurück, während die Doppelfingergreifarme (246, 247) nach wie vor druckluftbelastet an der Unterseite (292) des Möbelsockels (280) anliegen.

Sobald die Pulsierträgerplatte (261) beim Zurückfahren an der Unterseite des Zylinderblocks (220) anschlägt, verschiebt sich der Zylinderblock (220) auf den Führungsstangen (205, 206) - zusammen mit der Sockeleintreibvorrichtung (260) - aufgrund der trägen Masse Letzterer (260) unter einem Komprimieren der Schraubendruckfedern (207) nach oben. Die Rücklaufbewegung der Sockeleintreibvorrichtung (260) wird somit abgefedert. Die Gleitreibung in den Führungsstangen (205, 206) und den Hauptführungsbohrungen (223) wirkt zusätzlich dämpfend.

Die Vor - und Rücklaufbewegung der Sockeleintreibvorrichtung wiederholt sich bei dem hier vorliegenden Möbelsockel (280) in der Regel 1 bis 4-mal. Dann sitzt der Möbelsockel (280) mit seiner Möbelanlageseite (283) spielfrei auf der Oberfläche der Möbelplatte (1) auf. Um dies sicherzustellen, misst ein am Zylinderblock (220) angeordnetes Wegmesssystem (251), vgl. Figur 6, die hierfür vorgesehene untere Ausfahrposition des hinteren Setzkolbens (241).

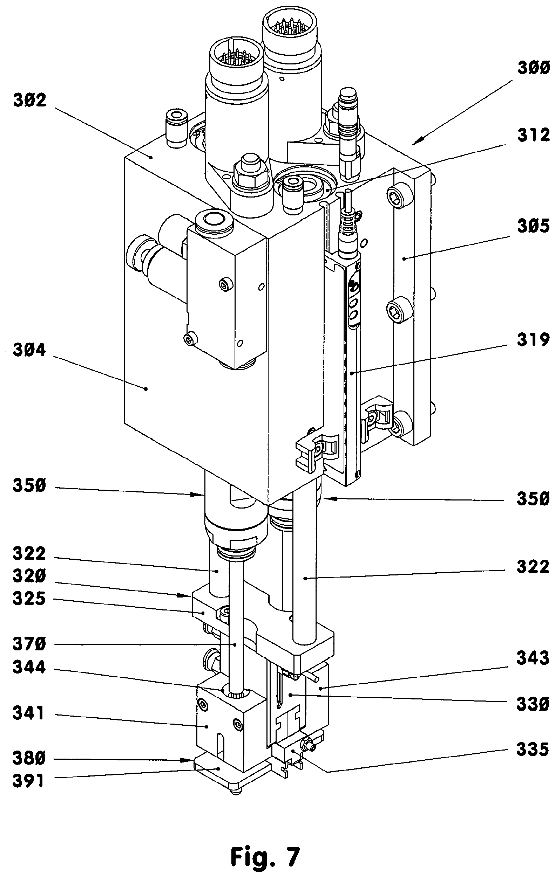

Die Figur 7 zeigt eine Beschlagsetzvorrichtung (300). Sie hat die Teilaufgabe, einen Möbelbeschlag (380) an einer Möbelplatte (1) zu befestigen. Bei der Beschlagsetzvorrichtung (300) sind in einem z.B. aus einer Aluminiumlegierung gefertigten Basiskörper (301) eine Beschlaggreifvorrichtung (320) und zwei baugleiche Elektroschraubvorrichtungen (350) gelagert und geführt.

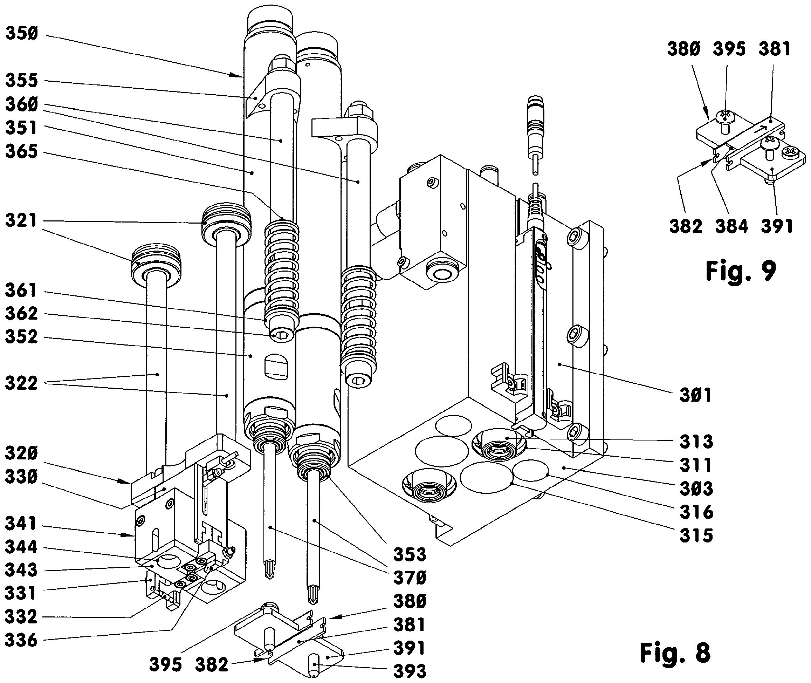

Der Möbelbeschlag (380) ist im Ausführungsbeispiel die Grundplatte eines Topfscharniers, an der der den Topf tragende Bandarm eingehängt ist, vgl. Figuren 8 und 9. In der Regel ist die Grundplatte am Möbelkorpus befestigt, während der Topf des Topfscharniers in der entsprechend schwenkbaren Möbeltür versenkt angeordnet ist. Der Möbelbeschlag (380) besteht hier aus einer zentralen Beschlagsschiene (381), an der beidseits zwei Anschraublaschen (391) angeformt sind. In jeder Anschraublasche (391) befindet sich eine Bohrung, in der ein Eindrückdübel (393) mit vormontierter Beschlagsschraube (395) fixiert ist. Die im Querschnitt u-förmige Beschlagsschiene (381) hat vorn und hinten jeweils zwei einander gegenüberliegende Beschlagsrastkerben (383, 384). Im hinteren Bereich weist die Beschlagsschiene (381) eine Schienenaussparung (382) auf.

Der Basiskörper (301) der Beschlagsetzvorrichtung (300) hat die Form eines quaderförmigen Klotzes, an dem - im Bereich seiner Rückseite - beidseitig jeweils ein Flanschsteg (305) angeformt ist. Über den Flanschsteg (305) ist der Basiskörper (301) an der Hauptflanschplatte (157) des Zentralkörpers (110) neben der Plattengreifvorrichtung (170) befestigt.

Der Basiskörper (301) weist zwei nebeneinanderliegende Greifzylinderbohrungen (311) auf, in deren jeweiligem oberen Ende, vgl. Figur 7, - zur Bildung eines Greifzylinders - ein Zylinderbohrungsdeckel (312) dichtend angeordnet ist. Die Bohrungswandung der einzelnen Greifzylinderbohrung (311) nähert sich der jeweils nächstgelegenen Seitenwandung des Basiskörpers (301) z.B. bis auf 4,5 mm an.

Jeder Zylinderbohrungsdeckel (312) weist an seiner Unterseite einen Permanentmagnet auf. Im Bereich der Unterseite des Basiskörpers (301), vgl. Figur 8, sitzt in der jeweiligen Greifzylinderbohrung (311) eine Zylinderbohrungsdichthülse (313), in der die jeweilige Beschlaggreifkolbenstange (322) abgedichtet geführt ist.

Die Figur 8 zeigt die wesentlichen Baugruppen der Beschlagsetzvorrichtung (300) seitlich zueinander versetzt in einem auseinandergezogenen Zustand. Links sieht man die Beschlaggreifvorrichtung (320), rechts den Basiskörper (301) und mittig die beiden nebeneinander angeordneten Elektroschraubvorrichtungen (350). Unterhalb der beiden Elektroschraubvorrichtungen (350) ist in der Verlängerung der Kreuzschlitzeinsätze (370) der Möbelbeschlag (380) dargestellt.

Die Mittellinien der in den Basiskörper (301) eingearbeiteten Greifzylinderbohrungen (311) liegen in einer Greifzylinderbohrungsebene, die parallel zur Frontseite (304) des Basiskörpers (301) orientiert ist. Quer zu dieser Ebene liegt eine Mittenlängsebene des Basiskörpers (301), in der die Mittellinien von zwei Schrauberführungsbohrungen (315) angeordnet sind. Die letztgenannten Mittellinien sind von der Greifzylinderbohrungsebene jeweils gleich weit entfernt. Alle vier Mittellinien sind parallel zueinander ausgerichtet.

Vor und hinter der Greifzylinderbohrung (311), die gemäß der Figuren 7 und 8 der vorn gelegenen Seitenwandung des Basiskörpers (301) am nächsten liegt, ist jeweils eine als durchgehende Stufenbohrung ausgeführte Schrauberabstützbohrung (316) angeordnet. An dieser Seitenwandung ist zudem ein analoges Wegmesssystem (319) angeordnet.

In den Greifzylinderbohrungen (311) sind die beiden Beschlaggreifkolben (321) der Beschlaggreifvorrichtung (320) geführt gelagert. Die einzelne Kolbenstange (322) der Beschlaggreifkolben (321) ist in der jeweiligen Zylinderbohrungsdichthülse (313) zusätzlich abgestützt. Der einzelne Beschlaggreifkolben (321) ist entweder aus einem ferromagnetischen Material gefertigt oder er weist einen Einsatz aus dem ferromagnetischen Material auf. Auf diese Weise lassen sich die Beschlaggreifkolben (321) ohne anstehende Druckluft in ihrer hinteren Position vor den Zylinderbohrungsdeckeln (312) temporär magnetisch fixieren.

Am jeweils freien Ende der beiden Beschlaggreifkolbenstangen (322) ist ein in erster Näherung quaderförmiges Kolbenstangenquerhaupt (325) angeschraubt. An der Unterseite dieses Kolbenstangenquerhaupts (325) ist eine Beschlagparallelgreifvorrichtung (330) angeordnet. In Letzterer sind beispielsweise zwei parallel zueinander verschiebbare Schlitten gelagert, die über ein Doppelschiebekeilgetriebe - für eine Greiferöffnungsbewegung - pneumatisch auseinander gefahren werden. Für die Greiferschließbewegung wird ein Federspeicher genutzt. Jeder der in der Unterseite der Beschlagparallelgreifvorrichtung (330) gelagerte Schlitten weist ein Greifmittel (331, 335) auf. Nach Figur 8 ist das hintere Greifmittel ein Achsengreifarm (331), während das vordere Greifmittel ein Hintergriffsarm (335) darstellt. Gegebenenfalls wird zumindest die Greifposition der Beschlagparallelgreifvorrichtung (330) sensorisch erfasst.

An den beiden größeren Seitenflächen des Gehäuses der Beschlagparallelgreifvorrichtung (330) ist jeweils ein Beschlagsstützblock (341, 342) befestigt, der an seiner Vorderseite eine dreiseitig angefaste Abstützfläche (343) aufweist. Die einzelne Abstützfläche (343) ragt mit geringem Spiel an das nächstgelegene Greifmittel (331, 335) heran. Jeder Beschlagsstützblock (341, 342) hat eine zu den Mittellinien der Beschlaggreifkolbenstangen (322) parallele Durchgangsbohrung (344), die bei montierter Beschlagsetzvorrichtung (300) gegenüber den vormontierten Beschlagsschrauben (395) des ergriffenen Möbelbeschlags (380) angeordnet ist, vgl. Figur 7.

Die beiden im Basiskörper (301) geführten Elektroschraubvorrichtungen (350) bestehen jeweils im Wesentlichen aus einem Elektromotor (351), einem Getriebe (352), einem Spannfutter (353), einem Werkzeugeinsatz (370) und einer Schrauberführungsstange (360). Der Elektromotor (351) und das Getriebe (352) sind hintereinander in einem zylindrischen Gehäuse untergebracht, wobei Letzteres mit geringem Spiel in der jeweiligen Schrauberführungsbohrungen (315) längsverschiebbar sitzt. Im oberen Bereich des Gehäuses ist ein kurzer Kragarm (355) angeordnet, an dem eine Schrauberführungsstange (360) befestigt ist. Das Gehäuse und die Schrauberführungsstange (360) sind parallel zueinander orientiert.

Die Schrauberführungsstange (360), deren Länge geringfügig größer ist als die Höhe des Basiskörpers (301), hat zum einen die Aufgabe, das beim Schraubvorgang um die Mittellinie des Werkzeugeinsatzes (370) entstehende Drehmoment in der Schrauberabstützbohrung (316) des Basiskörpers (301) abzustützen. Zum anderen liegt, nach Figur 8, am unteren Ende der Schrauberführungsstange (360) auf einer von einer Stützscheibenschraube (362) gehaltenen Stützscheibe (361) eine Rückholschraubendruckfeder (365) auf, die sich im Inneren der gestuften Schrauberabstützbohrungen (316) an einem Bohrungsbund abstützt. Beispielsweise vor oder bei einem Schraubvorgang kann somit der vom Zentralkörper (110) zusammen mit dem Basiskörper (301) gegen die zu verschraubende Beschlagsschraube (395) - im Rahmen des Federwegs der Rückholschraubendruckfeder (365) - vorgespannt werden, um während des Schraubvorgangs, ohne Vorschubbewegung des Basiskörpers (301), den rotierenden Werkzeugeinsatz (370) der sich einschraubenden Beschlagsschraube (395) folgen zu lassen.

Für die Montage des Möbelbeschlags (380) bewegt das Handhabungsgerät (10) den Zentralkörper (110) mit der Beschlagsetzvorrichtung (300) über den auf der Magazinablage bereitgestellten Möbelbeschlag (380). Der Möbelbeschlag liegt dort so orientiert, dass die Köpfe der Beschlagsschrauben (395) nach oben ragen. Die Beschlagsetzvorrichtung (300) nähert sich in der Verlängerung der Mittellinien der Beschlagsschrauben (395) mit voll ausgefahrener Beschlaggreifvorrichtung (320) dem Möbelbeschlag (380). Dabei stehen die Beschlagsschrauben (395) z.B. 17 mm vor den vorderen Enden der Kreuzschlitzeinsätze (370). Beim Anfahren des Möbelbeschlags (380) öffnen sich die Greifmittel (331, 335) der Beschlagparallelgreifvorrichtung (330).

Kurz darauf legen sich die Beschlagsstützblöcke (341, 342) mit ihrer Abstützfläche (343) auf den Anschraublaschen (391) des Möbelbeschlags (380) auf. Die aus dem Möbelbeschlag (380) herausragenden Beschlagsschrauben (395) tauchen in die Stützblockbohrungen (344) der Beschlagsstützblöcke (341, 342) ein. Nach dem Aufliegen wird die Beschlaggreifvorrichtung (320) noch z.B. 10 mm weiter gegen den Möbelbeschlag (380) geschoben, um ein sicheres Aufliegen der Abstützflächen (343) auf diesen zu gewährleisten. Hierbei geben die druckluftvorgespannten Beschlaggreifkolben (321) in den Greifzylinderbohrungen (311) um annähernd diesen Überdrückweg nach.

Nach dem Entlüften der Beschlagparallelgreifvorrichtung (330) legen sich die Greifmittel (331, 335) an der Beschlagsschiene (381) des Möbelbeschlags (380) an. Hierbei greift der Achsengreifarm (331) mit seiner Halteachse (332) in die am Möbelbeschlag (380) vorn liegenden Beschlagsrastkerben (383, 384) ein, während der Hintergriffsarm (335) mit seiner Hintergriffsnase (336) die hintere Schienenaussparung (382) hintergreift. Die Federkraft des Federspeichers der Beschlagparallelgreifvorrichtung (330) hält den Möbelbeschlag (380) in der Beschlaggreifvorrichtung (320).

Nachdem der Möbelbeschlag (380) mithilfe des Handhabungsgeräts - bei ausgefahrener Beschlaggreifvorrichtung (320) - vor die passenden Beschlagsbohrungen der Möbelplatte (1) transportiert worden ist, drückt das Handhabungsgerät den Möbelbeschlag (380) mit den Eindrückdübeln (393) voraus in Richtung der Mittellinien der Beschlagsschrauben (395) in die Beschlagsbohrungen. Dabei geben die Beschlaggreifkolben (321) in ihren Greifzylinderbohrungen (311) gegen die anstehende Druckluft einige Millimeter nach. Die Eindrücktiefe bzw. die Position des Möbelbeschlags (380) gegenüber der Oberfläche der Möbelplatte (1) wird mithilfe des analogen Wegmesssystems (319) erfasst, das an der Seitenwandung des Basiskörpers (301) befestigt ist.

In einem weiteren Schritt wird der Basiskörper (301) z.B. um 30 mm gegen den Möbelbeschlag (380) verschoben, sodass die Kreuzschlitzeinsätze (370) der Elektroschraubvorrichtungen (350) die Werkzeugausnehmungen der Beschlagsschrauben (395) kontaktieren. Die auf den Schrauberführungsstangen (360) sitzenden Rückholschraubendruckfedern (365) spannen die Kreuzschlitzeinsätze (370) gegen die Beschlagsschrauben (395).

Mit der Inbetriebnahme der Elektromotoren (351) der Elektroschraubvorrichtungen (350) schrauben sich die Beschlagsschrauben (395) in den in den Anschraublaschen (391) sitzenden Eindrückdübel (393). Die Elektromotoren (351) sind mit einer Drehmomentüberwachung ausgestattet.

Nachdem die Nutzung der Beschlagsetzvorrichtung (300) beendet ist, wird die Beschlaggreifvorrichtung (320) in ihre hintere Position gebracht, in der die Permanentmagnete der zylinderbohrungsdeckel (312) die Beschlaggreifkolben (321) magnetisch arretieren.

### Bezugszeichenliste:

- 1: Möbelplatten, Werkstücke
- 27: Drehteller, Gegenadapter, Adapter

- 130: Multibearbeitungseinheit
- 131: Roboterflanschplatte, Adapter
- 132: Kabelschlauchhalterung
- 135: Zwischenträgerplatte
- 136: Wartungsabstellstützen

- 140: Zentralkörper, Bohrkopf
- 141: Hauptkörper
- 142: Unterseite
- 143: Parkposition von (146)
- 144: Arbeitsposition von (146)
- 145: Bohrwerkzeuge, Werkzeugsystem
- 146: Bohrer, Stufenbohrer, Senker, Fingerfräser, Werkzeug
- 147: Motorflanschplatte
- 148: Servomotor, Motor, Antrieb

- 151: Nebenkörper
- 152: Tieflochbohrwerkzeug
- 153: Tieflochbohrer, Werkzeug
- 154: Mittellinie

- 157: Hauptflanschplatte
- 158: Ventilträgerplatte

- 170: Plattengreifvorrichtung, Greifwerkzeug, Werkzeugsystem
- 171: Adapterkeil
- 172: Flanschsteg

- 181: Parallelgreifvorrichtung, vorn
- 182: Parallelgreifvorrichtung, hinten
- 183: Gehäuse
- 184: Plattengreifschlitten
- 185, 186: Plattengreifelemente
- 189: Greifbelag
- 191: Wegmesssystem, analog

- 200: Sockelmontagevorrichtung, Montagevorrichtung, Werkzeugsystem
- 201: Adapterkörper
- 202: Führungsstangenhalter, oben
- 203: Führungsstangenhalter, unten
- 205, 206: Führungsstangen
- 207: Schraubendruckfedern
- 208: Distanzplatte

- 220: Zylinderblock
- 221: Oberseite
- 222: Frontseite
- 223: Hauptführungsbohrungen
- 224: Federsacklochbohrungen
- 226: Setzzylinderbohrungen
- 227, 228: Pulsierführungsbohrungen; hinten, vorn
- 229: Pulsierzylinderbohrung

- 231: Deckel, magnetisierbar für (229)
- 236: Deckel für (226)
- 239: Druckluftanschluss für Rückhub von (260)

- 240: Sockelgreifvorrichtung, Greifwerkzeug
- 241: Setzkolben
- 242: Setzkolbenstangen
- 243: Kolbenstangenquerhaupt
- 245: Setzparallelgreifvorrichtung
- 246, 247: Doppelfingergreifarme
- 248: Greiffinger

- 251: Wegmesssystem, absolut

- 260: Sockeleintreibvorrichtung, Eintreibvorrichtung
- 261: Pulsierträgerplatte
- 262: Pulsierkolben
- 263: Pulsierkolbenstange
- 264: Pulsierführungsstangen
- 265, 266: Pulsierdoppelarme
- 267: Freiraumnuten
- 268: Permanentmagnet in (262)

- 280: Möbelsockel, Sockel, Anbauteil
- 281: Sockelplatte
- 283: Möbelanlageseite
- 284: Möbelsteckzapfen

- 291: Sockelaufbaugehäuse
- 292: Unterseite
- 293: Bohrung, groß
- 295: Sockelmontagebohrungen
- 296: Sockelseitenstege

- 300: Beschlagsetzvorrichtung, Setzvorrichtung, Montagevorrichtung, Werkzeugsystem

- 301: Basiskörper
- 302: Oberseite
- 303: Unterseite
- 304: Frontseite
- 305: Flanschstege

- 311: Greifzylinderbohrung
- 312: Zylinderbohrungsdeckel, oben
- 313: Zylinderbohrungsdichthülse, unten

- 315: Schrauberführungsbohrungen
- 316: Schrauberabstützbohrungen
- 319: Wegmesssystem, analog

- 320: Beschlaggreifvorrichtung, Greifwerkzeug
- 321: Beschlaggreifkolben
- 322: Beschlaggreifkolbenstangen
- 325: Kolbenstangenquerhaupt
- 330: Beschlagparallelgreifvorrichtung
- 331: Achsengreifarm, Greifmittel
- 332: Halteachse
- 335: Hintergriffsarm, Greifmittel
- 336: Hintergriffsnase
- 341, 342: Beschlagsstützblock, vorn, hinten
- 343: Abstützfläche
- 344: Stützblockbohrung, Durchgangsbohrung

- 350: Elektroschraubvorrichtungen, Schraubvorrichtungen
- 351: Elektromotor
- 352: Getriebe
- 353: Spannfutter
- 355: Kragarm
- 360: Schrauberführungsstange
- 361: Stützscheibe
- 362: Stützscheibenschraube
- 365: Rückholschraubendruckfeder

- 370: Werkzeugeinsatz, Kreuzschlitzeinsatz

- 380: Möbelbeschlag, Grundplatte, Anbauteil
- 381: Beschlagsschiene
- 382: Schienenaussparung, hinten
- 382, 384: Beschlagsrastkerben, vorn, hinten
- 391: Anschraublaschen
- 393: Eindrückdübel
- 395: Beschlagsschrauben

## Patentansprüche

1. Multibearbeitungseinheit mit einer Vielzahl von in und an einem Zentralkörper (140) ein- oder angebauten bewegbaren Werkzeugen (145, 152, 200, 300) zur handhabenden, spanenden, fügenden und montierenden Werkstückmanipulation oder -bearbeitung mit mindestens einem zentralen Antrieb (148),
- wobei sich die spanenden Werkzeuge (145, 152) im Zentralkörper (140) entweder in einer eingefahrenen Parkposition (143) oder in einer ausgefahrenen Arbeitsposition (144) befinden,
- wobei mehrere spanende Werkzeuge (145, 152) - zu einer Gruppe mechanisch oder softwaretechnisch zusammengefasst - zeitgleich in eine Arbeitsposition (144) bringbar sind,
- wobei die spanenden Werkzeuge (145, 152) verschiedene Typen oder Größen für trennende Fertigungsverfahren darstellen,
- wobei von jedem Werkzeugtyp ein oder mehrere Werkzeuge (145) vorhanden sind,
- wobei mindestens ein handhabendes Werkzeug ein Greifwerkzeug (170, 240, 320) ist und
- **gekennzeichnet dadurch, dass** das Greifwerkzeug (170) eine zwei formsteif an einem Adapterkeil (171) befestigte Parallelgreifvorrichtungen (181, 182) aufweisende Plattengreifvorrichtung (170) zum Ergreifen vom Möbelplatten (1) ist.

2. Multibearbeitungseinheit gemäß Anspruch 1, **dadurch gekennzeichnet, dass** die verschiedenen Typen für trennende Fertigungsverfahren mindestens Bohrer (146, 153), Fräswerkzeuge und/oder Sägewerkzeuge sind.

3. Multibearbeitungseinheit gemäß Anspruch 1, **dadurch gekennzeichnet, dass** zumindest bei einem der Greifwerkzeuge (170, 240, 320) die Greifkraft pneumatisch und/oder mittels eines Federspeichers und die Lösekraft pneumatisch erzeugt wird.

4. Multibearbeitungseinheit gemäß Anspruch 1, **dadurch gekennzeichnet, dass** mindestens ein weiteres handhabendes Werkzeug eine Montagevorrichtung (200,300) ist, wobei die Montagevorrichtung (200, 300) eine Schraubvorrichtung (350) oder eine pulsierende oder hämmernde Eintreibvorrichtung (260) ist.

5. Multibearbeitungseinheit gemäß Anspruch 4, **dadurch gekennzeichnet, dass** die Eintreibvorrichtung (260) zum Setzen eines zapfentragenden Anbauteils (280) in zapfenaufnehmende Bohrungen eines Werkstücks eine Hämmervorrichtung mit einem pneumatisch abwechselnd aus- und einfahrenden Pulsierkolben (262) ist.

6. Multibearbeitungseinheit gemäß Anspruch 5, **dadurch gekennzeichnet, dass** die Eintreibvorrichtung (260) zusammen mit einer Greifvorrichtung (240) zum Greifen des zapfentragenden Anbauteils (280) in einer Montagevorrichtung (200) integriert ist, wobei die Eintreibvorrichtung (260) und die Greifvorrichtung (240) über einen Adapterkörper (201) am Zentralkörper (140) angeordnet sind.

7. Multibearbeitungseinheit gemäß Anspruch 1, **dadurch gekennzeichnet, dass** zum Montieren eines Anbauteils (380) an einem das Anbauteil tragenden Werkstück ein Greifwerkzeug (320) zum Greifen des Anbauteils (380) und eine Schraubvorrichtung (350) zum Festschrauben des Anbauteils (380) eine Setzvorrichtung (300) bilden.

8. Multibearbeitungseinheit gemäß Anspruch 1, **dadurch gekennzeichnet, dass** die Schraubvorrichtung (350) einen Elektromotor (351) oder eine Druckluftturbine aufweist, wobei beiden ein mechanisches Getriebe mit angeschlossenem Abtriebsdrehmomentsensor nachgeschaltet ist.

9. Multibearbeitungseinheit gemäß Anspruch 7, **dadurch gekennzeichnet, dass** die Setzvorrichtung (300) über einen Basiskörper (301) am Zentralkörper (140) angeordnet ist.

10. Multibearbeitungseinheit nach mindestens einem der vorangehenden Ansprüche, **dadurch gekennzeichnet, dass** das Greifwerkzeug (170), die Montagevorrichtung (200) und die Setzvorrichtung (300) - zum Zweck der Wartung und/oder des Austauschs - einzeln lösbar am Zentralkörper (140) befestigt sind.

11. Multibearbeitungseinheit gemäß Anspruch 1, **dadurch gekennzeichnet, dass** der Zentralkörper (140) einen zentralkörperseitigen Adapter (131) eines Werkzeugschnittstellensystems aufweist, über den die Massenkräfte der Multibearbeitungsseinheit (130) abgestützt sind und über den mindestens die Energie und die Datenkommunikation übertragbar ist, wobei der Adapter (131) und der komplementäre Gegenadapter (27) eines tragenden Handhabungsgeräts eine schnellwechselbare Schnittstelle bilden.

## Claims

1. A multi-processing unit comprising: a plurality of movable tools (145, 152, 200, 300), which are installed or mounted in and on a central body (140), for manipulating or processing workpieces by handling, machining, joining and assembling; and at least one central drive (148),
- wherein the machining tools (145, 152) are either in a retracted parking position (143) or in an extended working position (144) in the central body (140),
- wherein multiple machining tools (145, 152) - combined mechanically or by software to form a group - can be brought into a working position (144) simultaneously,
- wherein the machining tools (145, 152) are different types or sizes for cutting manufacturing methods,
- wherein one or more tools (145) are present for each tool type,
- wherein at least one handling tool is a gripping tool (170, 240, 320), and
- **characterised in that**
the gripping tool (170) is a panel-gripping device (170), which has two parallel gripping devices (181, 182) fastened rigidly to an adapter wedge (171), for gripping furniture panels (1).

2. The multi-processing unit according to Claim 1, **characterised in that** the different types for cutting manufacturing methods are at least drills (146, 153), milling tools and/or sawing tools.

3. The multi-processing unit according to Claim 1, **characterised in that** at least in one of the gripping tools (170, 240, 320), the gripping force is generated pneumatically and/or by means of a spring energy store, and the releasing force is generated pneumatically.

4. The multi-processing unit according to Claim 1, **characterised in that** at least one further handling tool is an assembly device (200, 300), wherein the assembly device (200, 300) is a screwing device (350) or a pulsing or hammering driving-in device (260).

5. The multi-processing unit according to Claim 4, **characterised in that** the driving-in device (260) for setting a peg-bearing attachment part (280) into pegreceiving holes in a workpiece is a hammering device with a pulsing piston (262) which alternately extends and retracts pneumatically.

6. The multi-processing unit according to Claim 5, **characterised in that** the driving-in device (260) together with a gripping device (240) for gripping the peg-bearing attachment part (280) is integrated in one assembly device (200), wherein the driving-in device (260) and the gripping device (240) are arranged on the central body (140) via an adapter body (201).

7. The multi-processing unit according to Claim 1, **characterised in that** to mount an attachment part (380) on a workpiece bearing the attachment part, a gripping tool (320) for gripping the attachment part (380) and a screwing device (350) for screw-fastening the attachment part (380) form a setting device (300).

8. The multi-processing unit according to Claim 1, **characterised in that** the screwing device (350) has an electric motor (351) or an air turbine, wherein a mechanical gearing mechanism with a connected output torque sensor is connected downstream of both of them.

9. The multi-processing unit according to Claim 7, **characterised in that** the setting device (300) is arranged on the central body (140) via a base body (301).

10. The multi-processing unit according to at least one of the preceding claims, **characterised in that** the gripping tool (170), the assembly device (200) and the setting device (300) are detachably fastened to the central body (140) individually for the purpose of maintenance and/or exchange.

11. The multi-processing unit according to Claim 1, **characterised in that** the central body (140) has a central-body-side adapter (131) of a tool interface system, via which the mass forces of the multi-processing unit (130) are supported and via which at least the energy and the data communication can be transmitted, wherein the adapter (131) and the complementary mating adapter (27) of a supporting handling device form a quick-change interface.

## Revendications

1. Ensemble de multi-usinage, pourvu d'une pluralité d'outils (145, 152, 200, 300) mobiles, intégrés ou montés dans et sur un corps central (140), destinés à la manipulation ou à l'usinage par manutention, par enlèvement de copeaux, par jointage et par montage de pièces à usiner avec au moins un entraînement (148) central,
- les outils (145, 152) pour l'enlèvement de copeaux se trouvant dans le corps central (140), soit dans une position d'arrêt (143) escamotée ou dans une position de travail (144) déployée,
- plusieurs outils (145, 152) pour l'enlèvement de copeaux étant susceptibles d'être amenés simultanément, rassemblés en un groupe par moyen technique mécanique ou logiciel, dans une position de travail (144),
- les outils (145, 152) pour l'enlèvement de copeaux représentant différents types ou différentes dimensions pour des procédés de fabrication par séparation,
- un ou plusieurs outils (145) de chaque type d'outil étant présent(s),
- au moins un outil de manutention étant un outil de préhension (170, 240, 320) et
- **caractérisé en ce que** l'outil de préhension (170) est un dispositif de préhension (170) de panneaux comportant deux dispositifs de préhension (181, 182) parallèles fixés de manière indéformable sur une cale d'adaptation (171) pour saisir des panneaux (1) de meubles.

2. Ensemble de multi-usinage selon la revendication 1, **caractérisé en ce que** les différents types destinés à des procédés de fabrication par séparation sont au moins des forets (146, 153), des outils de fraisage et / ou des outils de sciage.

3. Ensemble de multi-usinage selon la revendication 1, **caractérisé en ce qu'**au moins sur l'un des outils de préhension (170, 240, 320), la force de préhension est générée par voie pneumatique et / ou au moyen d'un accumulateur à ressort et la force de relâchement est générée par voie pneumatique.

4. Ensemble de multi-usinage selon la revendication 1, **caractérisé en ce qu'**au moins un autre outil de manutention est un dispositif de montage (200, 300), le dispositif de montage (200, 300) étant un dispositif de vissage (350) ou un dispositif d'enfoncement (260) par impulsions ou par martèlement.

5. Ensemble de multi-usinage selon la revendication 4, **caractérisé en ce que** pour placer une pièce rapportée (280) portant des chevilles dans des alésages d'une pièce à usiner recevant des chevilles, le dispositif d'enfoncement (260) est un dispositif de martèlement, pourvu d'un piston d'impulsion (262) entrant et sortant alternativement par moyen pneumatique.

6. Ensemble de multi-usinage selon la revendication 5, **caractérisé en ce que** le dispositif d'enfoncement (260) est intégré conjointement avec un dispositif de préhension (240) destiné à prendre la pièce rapportée (280) portant des chevilles dans un dispositif de montage (200), le dispositif d'enfoncement (260) et le dispositif de préhension (240) étant placés par l'intermédiaire d'un corps d'adaptateur (201) sur le corps central (140).

7. Ensemble de multi-usinage selon la revendication 1, **caractérisé en ce que** pour monter une pièce rapportée (380) sur une pièce à usiner portant la pièce rapportée, un outil de préhension (320), destiné à prendre la pièce rapportée (380) et un dispositif de vissage (350), destiné à visser la pièce rapportée (380) constituent un dispositif de mise en place (300).

8. Ensemble de multi-usinage selon la revendication 1, **caractérisé en ce que** le dispositif de vissage (350) comporte un moteur électrique (351) ou une turbine à air comprimé, en aval des deux étant montée une transmission mécanique, pourvue d'un capteur de couple de sortie raccordé.

9. Ensemble de multi-usinage selon la revendication 7, **caractérisé en ce que** le dispositif de mise en place (300) est placé par l'intermédiaire d'un corps de base (301) sur le corps central (140).

10. Ensemble de multi-usinage selon au moins l'une quelconque des revendications précédentes, **caractérisé en ce que**, à des fins de maintenance et / ou de remplacement, l'outil de préhension (170), le dispositif de montage (200) et le dispositif de mise en place (300) sont fixés de manière individuellement amovible sur le corps central (140).

11. Ensemble de multi-usinage selon la revendication 1, **caractérisé en ce que** le corps central (140) comporte un adaptateur (131) côté corps central d'un système d'interface d'outil, par l'intermédiaire duquel les forces d'inertie de l'ensemble de multi-usinage (130) sont soutenues et par l'intermédiaire duquel au moins l'énergie et la communication de données sont transmissibles, l'adaptateur (131) et le contreadaptateur (27) complémentaire d'un appareil de manutention porteur constituant une interface à changement rapide.
